## Europäisches Patentamt

## European Patent Office

## Office européen des brevets

(19)

(11) Veröffentlichungsnummer: **0 220 551**
**B1**

(12) **EUROPÄISCHE PATENTSCHRIFT**

(45) Veröffentlichungstag der Patentschrift:
**16.05.90**

(51) Int. Cl.⁵: **A61C 5/04**

(21) Anmeldenummer: **86113806.3**

(22) Anmeldetag: **06.10.86**

(54) Applikationsspritze für eine Dentalmasse und Verfahren zur Herstellung derselben.

(30) Priorität: **07.10.85 DE 8528512 U**

(43) Veröffentlichungstag der Anmeldung:
**06.05.87 Patentblatt 87/19**

(45) Bekanntmachung des Hinweises auf die Patenterteilung:
**16.05.90 Patentblatt 90/20**

(84) Benannte Vertragsstaaten:
**AT BE CH DE ES FR GB GR IT LI LU NL SE**

(56) Entgegenhaltungen:
**EP-A- 0 248 210**
**DE-A- 2 903 331**
**GB-A- 734 983**
**US-A- 4 184 490**
**US-A- 4 266 557**

(73) Patentinhaber: **Mühlbauer, Ernst, Fangdieckstrasse 61, D-2000 Hamburg 53(DE)**

(72) Erfinder: **Mühlbauer, Ernst, Fangdieckstrasse 61, D-2000 Hamburg 53(DE)**

(74) Vertreter: **Glawe, Delfs, Moll & Partner Patentanwälte, Postfach 26 01 62 Liebherrstrasse 20, D-8000 München 26(DE)**

ACTORUM AG

## Beschreibung

Die Erfindung bezieht sich auf eine Einweg-Applikationsspritze für eine Dentalmasse mit einem aus thermoplastischem Material bestehenden und an seinem hinteren Ende einen Griffteil aufweisenden Spritzenkörper, welcher einen Zylinderraum einschließt, in dem ein stangenförmiger, mit einem Griffteil ausgerüsteter Kolben verschiebbar ist. Die Erfindung bezieht sich ferner auf ein Verfahren zur Herstellung einer solchen Spritze.

Herkömmlich nimmt der Zahnarzt die separat gemischte Dentalmasse mit einer mehrfach verwendbaren Spritze auf, die in einem dünnen Ausbringröhrchen endet und einen verschiebbaren Kolben enthält, um es mit dieser Spritze zu applizieren (GB-A 734 983, US-A 4 184 490). Dieser Vorgang ist umständlich, zumal die Spritze nach jedem Gebrauch gereinigt und sterilisiert werden muß.

Man hat daher Einweg-Applikationsspritzen der eingangs genannten Art entwickelt, die für einmaligen Gebrauch bestimmt sind und die in separaten Kammern Quecksilber und Silberfeilung enthalten, wobei diese Komponenten in der Spritze selbst gemischt werden (DE-OS 2 903 331); jedoch haben sich diese Spritzen nicht durchsetzen können, weil die dichte Aufbewahrung des Quecksilbers darin sowie die quantitative Zusammenführung und vollständige Mischung der Komponenten Schwierigkeiten bereiten.

Das Prinzip der Einweg-Applikationsspritzen hat sich erst durchgesetzt im Zusammenhang mit lichthärtenden Einkomponenten-Füllmassen, die in spritzenartig ausgebildeten Applikationspatronen enthalten sind. Diese umfassen einen Spritzenkörper mit darin verschiebbarem Zylinder sowie ein gebogenes Ausbringröhrchen. Da die Kraft zur Verschiebung des Kolbens in dem Spritzenkörper beträchtlich ist, wird zu ihrer Benutzung ein Werkzeug benötigt, das beispielsweise zangen- oder pistolenartig ausgebildet ist (DE-AS 2 045 509, DE-OS 2 110 463, DE-OS 3 235 232, US-PS 4 391 590). Die Notwendigkeit eines besonderen Werkzeugs ist nachteilig, zumal dies mit dem Mund des Patienten in Berührung kommen könnte und daher sterilisiert werden müßte. Die Herstellung dieser Wegwerfspritzen ist aufwendig, weil die gebogene Form der Ausbringröhrchen zur Bildung des Hohlraums einen kompliziert aufgebauten, mehrteiligen Kern benötigt. Diese Art der Herstellung hat auch den Nachteil, daß das gekrümmte Ausbringröhrchen nur relativ kurz sein kann.

Ferner sind Applikationsspritzen für Einkomponenten-Füllmassen bekannt, die ein großes Aufnahmevolumen besitzen und für mehrfachen Gebrauch bestimmt sind (DE-OS 3 212 187). Auch diese sollten vor jeder Verwendung sterilisiert werden, was aber im Hinblick auf ihren gefüllten Zustand kaum möglich ist.

Zum nicht vorveröffentlichten Stand der Technik gemäß Art. 54(3)(4)EPÜ gehört eine Applikationsspritze, die ein beträchtliches Aufnahmevolumen aufweist und daher für Einmalgebrauch nicht geeignet ist (EP-A 0 248 210). Zum Ausbringen einer viskosen Zahnfüllmasse muß innerhalb des Spritzenkörpers ein beträchtlicher Druck erzeugt werden, der wegen des großen Kolbendurchmessers eine beträchtliche Kolbenkraft verlangt. Dabei ist die für das Ausbringen einer üblichen Zahnfüllmenge zurückzulegende Kolbenhubstrecke sehr klein. Das ungünstige Verhältnis von Kolbenkraft und Kolbenweg erschwert die exakte Dosierung und Plazierung der auszubringenden Menge. – Wie die Spritze hinsichtlich des in gebogener Form an den Spritzenkörper angesetzten Ausbringröhrchens hergestellt wird, ist nicht offenbart.

Der Erfindung liegt daher die Aufgabe zugrunde, eine kostengünstige Applikationsspritze für einmaligen Gebrauch zu schaffen, die ohne Werkzeug verwendbar ist, hygienischen Gebrauch und genaue Dosierung und Plazierung ermöglicht. Ferner liegt der Erfindung die Aufgabe zugrunde, ein einfaches Verfahren zur Herstellung einer solchen Applikationsspritze mit gebogenem Ausbringröhrchen zu schaffen, dessen Länge beliebig gewählt werden kann.

Die erfindungsgemäße Lösung besteht darin, daß die wirksame Querschnittsfläche des Kolbens nicht größer ist als etwa 10 mm² bei einem Verhältnis des Nutzhubs zum Durchmesser des Kolbens von mindestens etwa 10, daß der Spritzenkörper an seinem vorderen Ende einstückig mit einem dünnen, gebogenen Ausbringröhrchen verbunden ist und daß sich der lichte Querschnitt des Ausbringröhrchens ausgehend von einem dem Querschnitt des Zylinderraums des Spritzenkörpers entsprechenden Anschlußquerschnitt hin zum Austrittsquerschnitt des Ausbringröhrchens in einem Verhältnis von kleiner als etwa 3 : 1 verringert.

Die Erfindung hatte bei der Schaffung einer in ihrer Gesamtheit für nur einmalige Benutzung ausgelegten Applikationsspritze zwei Schwierigkeiten zu überwinden. Die eine besteht darin, daß die für den Vortrieb des Kolbens erforderliche Kraft so gering sein muß, daß ein besonderes Werkzeug entbehrlich ist. Die andere besteht darin, daß im Hinblick auf die notwendige Konkurrenzfähigkeit zu den kleinen und einfachen Applikationskapseln der Herstellungsaufwand sehr gering gehalten werden muß, um mit den oben erwähnten Applikationskapseln konkurrieren zu können.

Durch die Wahl eines ungewöhnlichen geringen Kolbendurchmessers, der nicht größer als etwa 10 oder besser noch 7 mm² ist, wird die für den Austrieb der Masse aus einer Düsenöffnung vorgegebener Größe erforderliche Kraft beträchtlich gesenkt. Der geringe Kolbendurchmesser hat zwar für ein vorgegebenes Ausbringvolumen von beispielsweise 100 mm³ eine beträchtliche Vergrößerung des erforderlichen Hubs zur Folge; im Gegensatz zu einem Werkzeug stellt jedoch für die menschliche Hand ein Hub in der Größenordnung von beispielsweise 3 cm kein Problem dar. – Was den Aufwand für die erfindungsgemäße Applikationsspritze angeht, so ist dieser einerseits abhängig von der Qualität der Kolbendichtung. Im Vergleich mit den bekannten Applikationskapseln können zur Erfüllung gleicher Dichtheitsanforderungen die Querschnittstoleranzen bei der erfindungsgemäßen Spritze wegen der geringeren Umfangslänge der Dichtstrecke wesentlich größer sein als bei den bekannten Kapseln. Andererseits ist der Herstellungsaufwand abhängig von der Kompliziertheit des Füllverfahrens, das bei der erfindungsgemäßen Spritze sehr einfach ist.

Weil der Kolben im hinteren Abschnitt des Zylinderraums, den er im gebrauchsbereiten Ruhezustand der Applikationsspritze einnimmt, nicht direkt an der Zylinderwand anliegt, kann der Kolben in den Zylinderraum eingeschoben werden nachdem die Masse bereits in dem vorderen Abschnitt des Zylinderraums eingebracht wurde; denn das zwischen der Masse und dem Kolben befindliche Gas (Luft oder Schutzgas) kann durch den Spalt zwischen der Zylinderwand durch den Spalt und dem Kolben entweichen. Wenn der Kolben eine angeformte Dichtlippe aufweist, so ist deren Durchmesser als der maßgebende Kolbendurchmesser anzusehen, der etwas geringer sein soll als der Durchmesser des Zylinderraums in dem von der Masse nicht gefüllten hinteren Teil des Spritzenkörpers, der von dem Kolben eingenommen werden soll. Sobald der Kolben auf die Masse trifft bzw. gegen diese gepreßt wird, steigt der auf die Dichtlippe des Kolbens wirkende Druck an und preßt die Dichtlippe gegen die Zylinderwand, und zwar auch dann, wenn der entspannte Durchmesser der Dichtlippe beim Auftreffen auf die Masse noch etwas geringer sein sollte als der des Zylinderraums. Es ist aus diesen und anderen Gründen nicht erforderlich, daß der Kolbendurchmesser genau an der Grenze zwischen dem vorderen, von der Masse gefüllten Abschnitt und dem hinteren, von dem Kolben einzunehmenden Abschnitt dem Zylinderraumdurchmesser gleich ist.

Da der Zylinderraum des Spritzenkörpers lang und dünn ist, kann man zur Herstellung der erfindungsgemäßen Spritzen nicht das bekannte Herstellungsverfahren benutzen, bei dem der Spritzenkörper und das gebogene Ausbringröhrchen in einem einheitlichen Spritzgußprozeß hergestellt werden, denn der dünne lange Zylinderraum verhindert die Verwendung von mehrteiligen, gekrümmten Formkernen. Jedoch ermöglicht die lange, dünne Gestalt der erfindungsgemäßen Spritze ein wesentlich einfacheres Herstellungsverfahren, bei dem der Spritzenkörper und das Ausbringröhrchen zunächst geradachsig miteinander fluchtend unter Verwendung einer einfachen Spritzgußform mit nur einem einheitlichen Kern hergestellt werden und das Ausbringröhrchen erst anschließend im noch warmen oder wieder erwärmten Zustand des thermoplastischen Materials gebogen wird. Dieses Verfahren ist nicht anwendbar bei den bekannten Applikationskapseln, weil bei diesen das Ausbringröhrchen im Verhältnis zu seiner Länge zu dick ist. Die einfache Herstellbarkeit der erfindungsgemäßen Spritze ist somit eine Folge ihrer dünnen Gestalt mit einem geringen Verhältnis der lichten Querschnittsfläche des Zylinderraums und des Endes des Ausbringröhrchens, wobei deren Verhältnis vorteilhafterweise nicht größer als 3 : 1 ist.

Die Erfindung wird im folgenden näher unter Bezugnahme auf die Zeichnung erläutert, die ein vorteilhaftes Ausführungsbeispiel veranschaulicht. Darin zeigen:

Fig. 1 einen Längsschnitt durch eine erfindungsgemäße Applikationsspritze,

Fig. 2 den Spritzenkörper nach der ersten Herstellungsstufe und

Fig. 3 eine im Durchmesser stark vergrößerte Darstellung.

Die Applikationsspritze besteht aus dem Spritzenkörper (1), der einen Zylinderraum (2) zur Aufnahme der viskosen Masse einschließt, am Ende einstückig in das dünne Ausbringröhrchen (3) ausläuft und einen Griff-Flansch (4) aufweist, sowie aus dem Stangenkolben (5) mit Griffplatte (6). Der Kolben (5) besteht aus einem gegen Biegung widerstandsfähigen Material, damit er trotz seiner Dünnheit unter den Vortriebskräften nicht knickt. Geeignete Werkstoffe sind Polypropylen, Polyäthylen oder Polyamid in hinreichend elastischen Einstellungen für den Spritzenkörper und glasfaserverstärkter Kunststoff für den Kolben.

Das Ausbringröhrchen (3) kann mit einer abnehmbaren Verschlußkappe versehen sein. Um die in der Spritze aufzubewahrende Masse vor schädigendem Einfluß zu schützen, kann statt dessen auch vorgesehen sein, daß das Gerät in einen Folienbeutel eingeschweißt ist oder in anderer Weise sicher verpackt ist.

Die Querschnittsgröße des Kolbens (5) und des Zylinderraums (2) liegt zweckmäßigerweise zwischen 1 und 7 mm².

Der Nutzhub des Kolbens (5) ist diejenige Strecke (7), um die er zwischen seiner gebrauchsbereiten Ruhestellung und seiner gänzlich eingeschobenen Stellung verschoben werden kann.

Bei einer praktisch bewährten Spritze gemäß der Erfindung betragen der Kolbenquerschnitt 6 mm² und der Nutzhub etwa 25 mm.

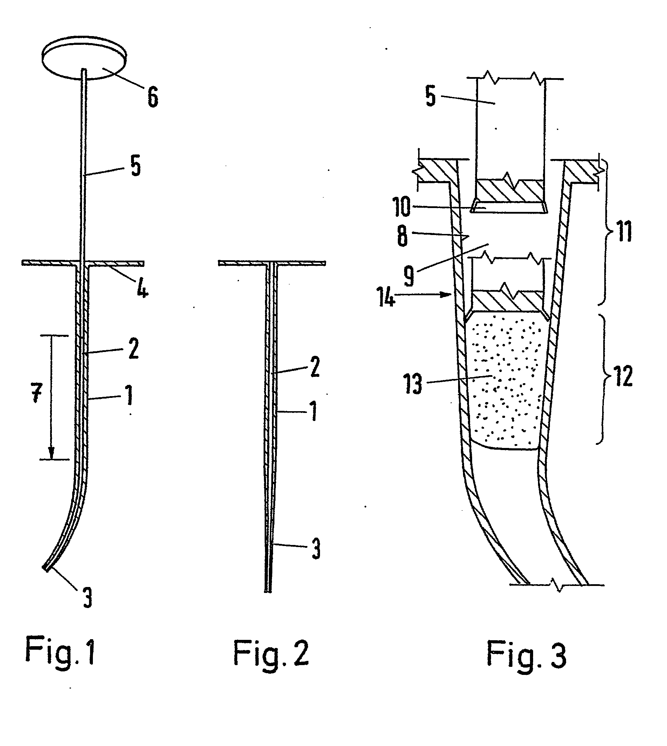

Der Spritzenkörper wird beispielsweise im Spritzgußverfahren in der in Fig. 2 erscheinenden Gestalt hergestellt. Die Herstellungsform kann einfach sein, weil nur ein einfacher, gerader Formkern für die Formung des Innenraums des Spritzenkörpers einschließlich des Innenraums des Ausbringröhrchens erforderlich ist. Erst anschließend wird das Ausbringröhrchen gebogen, was deshalb unproblematisch ist, weil das Ausbringröhrchen auch in seinem dem Zylinderteil des Spritzenkörpers benachbarten Teil relativ dünn ist und sein Durchmesser sich über seine Länge nicht stark ändert.

Zwischen dem Kolben (5) und der ihn umschließenden Wand (8) soll eine geeignete Dichtung vorgesehen sein. Diese kann – wie bekannt – dadurch gebildet sein, daß der Kolben ein geringes Übermaß über dem lichten Durchmesser des Zylinderraums (9) besitzt und die Zylinderwand entsprechend elastisch ist, so daß sie sich im Zusammenwirken mit dem Kolbenumfang elastisch dehnt und spaltfrei am Kolben anliegt. Zu diesem Zweck kann der Kolben an seinem vorderen Ende verdickt sein oder eine Dichtlippe aufweisen.

Bevorzugt wird die Ausführungsform, die im folgenden anhand von Fig. 3 erläutert wird, welche die Anordnung gemäß Fig. 1 im Durchmesser übertrieben vergrößert darstellt. Demgemäß ist die Zylinderwand (8) nicht exakt zylindrisch, sondern schwach konisch derart ausgebildet, daß sie sich zum kolbenseitigen Ende hin ein wenig erweitert. Der Kolben (5) trägt an seinem vorderen Ende eine umlaufende Dichtlippe (10), deren Durchmesser ein wenig geringer ist als der lichte Durchmesser des Zylinderraums (9) in dem hinteren Abschnitt (11) des Spritzenkörpers, der nach dem Einfüllen der Masse (13) in dem Bereich (12) leer, d.h. gasgefüllt, bleibt. Wenn nach dem Einfüllen der Masse der Kolben (5) in den Spritzenkörper eingeschoben wird, kann daher das dazwischen befindliche Gas durch den Spalt zwischen der Wand (8) und der Dichtlippe (10) herausdringen, bis die Kolbenstirn an der Masse (13) anliegt, wie dies bei (14) in Fig. 3 angedeutet ist. Die Abmessungen von Kolben und Zylinderraum sind so gehalten, daß die Dichtlippe (10) in dieser Stellung etwa die Zylinderwand (8) erreicht. Jedoch schadet es nichts, wenn auch an dieser Stelle der Durchmesser der Lippe (10) noch etwas geringer ist als derjenige der Wand (8), weil beim Erreichen der Masse der vor dem Kolben herrschende Druck derart anwächst, daß die Lippe (10) nach außen gegen die Zylinderwand gepreßt wird.

## Patentansprüche

1. Einweg-Applikationsspritze für eine Dentalmasse mit einem aus thermoplastischem Material bestehenden und an seinem hinteren Ende einen Griffteil (4) aufweisenden Spritzenkörper (1), welcher einen Zylinderraum (2) einschließt, in dem ein stangenförmiger, mit einem Griffteil (6) ausgerüsteter Kolben (5) verschiebbar ist, dadurch gekennzeichnet, daß die wirksame Querschnittsfläche des Kolbens nicht größer ist als etwa 10 mm² bei einem Verhältnis des Nutzhubs zum Durchmesser des Kolbens von mindestens etwa 10, daß der Spritzenkörper (1) an seinem vorderen Ende einstückig mit einem dünnen, gebogenen Ausbringröhrchen (3) verbunden ist und daß sich der lichte Querschnitt des Ausbringröhrchens ausgehend von einem dem Querschnitt des Zylinderraums (2) des Spritzenkörpers (1) entsprechenden Anschlußquerschnitt hin zum Austrittsquerschnitt des Ausbringröhrchens in einem Verhältnis von kleiner als etwa 3 : 1 verringert.

2. Applikationsspritze nach Anspruch 1, dadurch gekennzeichnet, daß die wirksame Querschnittsfläche des Spritzenkolbens geringer als etwa 7 mm² ist.

3. Applikationsspritze nach einem der Ansprüche 1 bis 2, dadurch gekennzeichnet, daß das Verhältnis zwischen den lichten Querschnittsflächen des Spritzenkörpers und am dünnen Ende des Ausbringröhrchens nicht größer als etwa 5 : 2 ist.

4. Verfahren zum Herstellen einer Einweg-Applikationsspritze für eine Dentalmasse nach einem der Ansprüche 1 bis 3, welche Applikationsspritze einen aus thermoplastischem Material bestehenden Spritzenkörper (1) aufweist, welcher einen Zylinderraum (2) einschließt, in dem ein stangenförmiger Kolben verschiebbar ist, dadurch gekennzeichnet, daß die wirksame Querschnittsfläche des Kolbens nicht größer ist als etwa 10 mm², wobei der Spritzenkörper und das Ausbringröhrchen zunächst geradachsig miteinander fluchtend hergestellt werden und das Ausbringröhrchen anschließend im noch warmen oder wieder erwärmten Zustand des thermoplastischen Materials gebogen wird, und daß der lichte Querschnitt des Ausbringröhrchens so gewählt wird, daß er sich ausgehend von einem dem Querschnitt des Zylinderraums des Spritzenkörpers entsprechenden Anschlußquerschnitt hin zum Austrittsquerschnitt des Ausbringröhrchens in einem Verhältnis von kleiner als etwa 3 : 1 verringert.

## Claims

1. A disposable applicator syringe for a dental composition having a syringe body (1) formed of thermoplastic material and having a handle member (4) at its rear end, which syringe body (1) encloses a cylindrical chamber (2) in which a rod-like piston (5) provided with a grip part (6) is displaceable, characterised in that the effective cross-sectional area of the piston is not greater than about 10 mm² for a ratio of the effective stroke to the diameter of the piston of at least about 10, in that at its front end the syringe body (1) is connected integrally with a slender, curved outlet tube (3), and in that the unobstructed cross-section of the outlet tube, starting from a transitional cross-section corresponding to the cross-section of the cylindrical chamber (2), decrease towards the discharge cross-section of the outlet tube in a ratio of less than about 3 : 1.

2. An applicator syringe according to Claim 1, characterised in that the effective cross-sectional area of the syringe piston is less than about 7 mm².

3. An applicator syringe according to either of Claims 1 and 2, characterised in that the ratio between the unobstructed cross-sectional areas of the syringe body and the slender end of the outlet tube is not greater than approximately 5 : 2.

4. A method for the manufacture of a disposable applicator syringe for a dental composition according to any one of Claims 1 to 3, which applicator syringe has a syringe body (1) formed of thermoplastic material, which syringe body (1) encloses a cylindrical chamber (2) in which a rod-like piston is displaceable, characterised in that the effective cross-sectional area of the piston is not greater than about 10 mm², wherein the syringe body and the outlet tube are initially produced mutually aligned along a straight axis and, subsequently, the outlet tube is bent while the thermoplastic material is still hot or in a reheated condition, and in that the unobstructed cross-section of the outlet tube is so chosen, starting from a transitional cross-section corresponding to the cross-section of the cylindrical chamber of the syringe body, that it decreases towards the discharge cross-section of the outlet tube in a ratio of less than about 3 : 1.

## Revendications

1. Seringue d'application jetable pour une pâte de dentisterie, comprenant un corps de seringue (1) qui est fait de matière thermoplastique, comporte une partie (4) permettant de la saisir à son extrémité postérieure et délimite une cavité cylindrique (2) dans laquelle peut se déplacer un piston (5) en forme de tige, muni d'une partie (6) permettant de le manipuler, caractérisée en ce que la surface active du piston en coupe transversale n'est pas supérieure à 10 mm² environ pour un rapport de la course utile au diamètre du piston d'au moins 10 environ, en ce que le corps de seringue (1) se raccorde d'un seul tenant, par son extrémité antérieure, à un petit tube mince et courbe d'expulsion (3) et en ce que la section intérieure du petit tube d'expulsion se resserre dans un rapport de moins de 3 : 1 environ à partir d'une section de raccordement correspondant à la section de la cavité cylindrique (2) du corps de seringue (1) jusqu'à la section de sortie du petit tube d'expulsion.

2. Seringue d'application selon la revendication 1, caractérisée en ce que la surface active du piston de seringue en coupe transversale est inférieure à 7 mm² environ.

3. Seringue d'application selon la revendication 1 ou 2, caractérisée en ce que le rapport entre les surfaces des sections intérieures du corps de seringue et de l'extrémité mince du petit tube d'expulsion n'est pas supérieur à 5 : 2 environ.

4. Procédé de fabrication d'une seringue d'application jetable pour une pâte de dentisterie selon l'une quelconque des revendications 1 à 3, seringue d'application qui comprend un corps de seringue (1) fait de matière thermoplastique qui définit une cavité cylindrique (2) dans laquelle peut se déplacer un piston en forme de tige, caractérisé en ce que la surface active du piston en coupe transversale n'est pas supérieure à 10 mm² environ, le corps de seringue et le petit tube d'expulsion étant d'abord fabriqués dans l'alignement l'un de l'autre suivant un axe rectiligne, puis le petit tube d'expulsion étant courbé à l'état encore chaud ou réchauffé de la matière thermoplastique, et en ce que la section intérieure du petit tube d'expulsion est choisie de telle manière qu'elle se resserre dans un rapport de moins de 3 : 1 environ à partir d'une section de raccordement correspondant à la section de la cavité cylindrique du corps de seringue jusqu'à la section de sortie du petit tube d'expulsion.

Fig.1

Fig.2

Fig. 3